(19) Europäisches Patentamt
European Patent Office
Office européen des brevets

(11) Veröffentlichungsnummer : **0 223 056**
**B1**

(12) # EUROPÄISCHE PATENTSCHRIFT

(45) Veröffentlichungstag der Patentschrift : **22.02.89**

(21) Anmeldenummer : **86114127.3**

(22) Anmeldetag : **13.10.86**

(51) Int. Cl.⁴ : **C 08 L 69/00** // (C08L69/00, 69:00)

(54) **Mischungen aromatischer Polycarbonate und aromatischer Polyestercarbonate und ihre Verwendung zur Herstellung von Formkörpern, Folien, Fasern, Filamenten und Beschichtungen.**

(30) Priorität : **23.10.85 DE 3537622**

(43) Veröffentlichungstag der Anmeldung : **27.05.87 Patentblatt 87/22**

(45) Bekanntmachung des Hinweises auf die Patenterteilung : **22.02.89 Patentblatt 89/08**

(84) Benannte Vertragsstaaten : **DE FR GB IT NL**

(56) Entgegenhaltungen :
**EP-A- 0 010 602**
**EP-A- 0 036 080**
**US-A- 4 436 879**

(73) Patentinhaber : **BAYER AG**
**Konzernverwaltung RP Patentabteilung**
**D-5090 Leverkusen 1 Bayerwerk (DE)**

(72) Erfinder : **Serini, Volker, Dr.**
**Sebastian-Kneipp-Weg 2**
**D-4150 Krefeld (DE)**
Erfinder : **Freitag, Dieter, Dr.**
**Hasenheide 10**
**D-4150 Krefeld 1 (DE)**
Erfinder : **Rathmann, Dietrich, Dr.**
**Alte Landstrasse 119**
**D-5090 Leverkusen 1 (DE)**

EP 0 223 056 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft thermoplastische verarbeitbare Mischungen aromatischer Polycarbonate und aromatischer Polyestercarbonate mit geringerer Spannungsrißneigung und ihre Verwendung zur Herstellung von Formkörpern, Folien, Fasern, Filamenten und Beschichtungen.

Aromatische Polycarbonate haben aufgrund ihrer guten Schlag- und Kerbschlagzähigkeit und ihrer guten Fließfähigkeit in der Schmelze breite Verwendung zur Herstellung von Formkörpern, Folien und Beschichtungen gefunden. Aromatische Polyestercarbonate weisen eine Kombination dieser Eigenschaften und der hohen Wärmeformbeständigkeit rein aromatischer Polyester auf.

Durch Mischen aromatischer Polycarbonate und aromatischer Polyestercarbonate lassen sich viele wünschenswerte Eigenschaftskombinationen einstellen (JP-A 55/058 248, 55/131 048, 55/133 445).

Diese Mischungen weisen zwar eine Reihe interessanter Eigenschaften auf, z. B. hohe Glasübergangstemperatur, gute Hitzebeständigkeit, Schlagzähigkeit und Verarbeitbarkeit, können aber bezüglich ihres Spannungsrißverhaltens nicht ganz befriedigen.

Überraschenderweise wurde nun gefunden, daß Mischungen (Estergruppen-freier) aromatischer Polycarbonate und aromatischer Polyestercarbonate mit bestimmtem Polycarbonat/Polyestercarbonat-Verhältnis und mit definiertem Esteranteil des Polyestercarbonats, wobei mindestens eines der Polykondensate $C_8$-$C_9$-alkylierte Phenyl-Endgruppen enthält, eine verminderte Spannungsrißneigung besitzen.

Gegenstand der Erfindung sind Mischungen aus

I. aromatischem Polycarbonat und
II. aromatischem Polyestercarbonat, wobei

a) die Mischung
5 bis 70, vorzugsweise 10 bis 65, insbesondere 15 bis 60, Gew.-% I und
95 bis 30, vorzugsweise 90 bis 35, insbesondere 85 bis 40, Gew.-% II enthält, wobei sich die Prozentangaben zu I und II auf die Summe I + II beziehen,

b) der Estergruppengehalt des Polyestercarbonats II 60 bis 95, vorzugsweise 60 bis 85, insbesondere 70 bis 80, Mol-%, bezogen auf die Summe von Ester- und Carbonatgruppen in II, beträgt und

c) wenigstens eine der Komponenten I und II 0,5-20 Mol%, bez. auf die Summe der in I und II einkondensierten Diphenolreste, Endgruppen der Formel

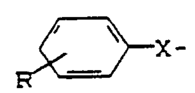

(I)

enthält, worin
—X— für —O— oder —CO— steht und
R einen verzweigten Alkylrest mit 8 bis 9 C-Atomen darstellt mit der Maßgabe, daß im Alkylrest R der Anteil von Methyl-Wasserstoffatomen, bezogen auf sämtliche Wasserstoffatome des Alkylrestes, 47 bis 89 % beträgt und daß R in o- und/oder p-Position steht.

Bevorzugte Diphenole für die Herstellung der Polycarbonate I bzw. der Polyestercarbonate II sind Verbindungen der Formel

$$HO—Z—OH \quad (II)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

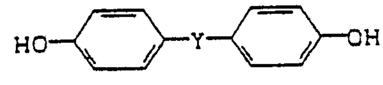

(III)

in der Y eine Einfachbindung, einen Alkylen- oder Alkylidenrest mit 1-7 C-Atomen, einen Cycloalkylen- oder Cycloalkylidenrest mit 5-12 C-Atomen, —O—, —S—,

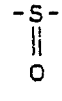

—$SO_2$—, oder

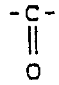

bedeutet, sowie deren kernalkylierte und kernhalogenierte Derivate, z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole und
Phthaleine

sowie deren kernalkylierte und kernhalogenierte Verbindungen. Diese und weitere geeignete Diphenole sind z. B. in den US-A-3 028 365, 3 275 601, 3 148 172, 3 062 781, 2 991 273, 3 271 367, 2 999 835, 2 970 131, und 2 999 846, in den DE-A-1 570 704, 2 064 050, 2 063 052, 2 211 956, 2 211 957, der FR-A-1 561 518 und in der Monographie « H. Schnell, Chemistry and Physics of Polycarbonates, Interscience Publishers, New York, 1964 » beschrieben.

Die wichtigsten Diphenole seien nachfolgend namentlich aufgezählt :

Bisphenol A,
Bis-(4-hydroxyphenyl)-methan,
Bis-(4-hydroxyphenyl)-2-butan,
Bis-(4-hydroxyphenyl),
1,1-Bis-(4-hydroxyphenyl)-cyclohexan,
2,2-Bis-(3-methyl-4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
Bis-(4-hydroxyphenyl)-sulfid,
Bis-(4-hydroxyphenyl)-sulfon,
α',α'-Bis-(4-hydroxyphenyl)-p-diisopropylbenzol,
Phenolphthalein.

Nach einer bevorzugten Ausführungsform enthalten unabhängig voneinander die Polycarbonate I und/oder die Polyestercarbonate II mindestens 70, vorzugsweise mindestens 90, insbesondere 100 Mol-%, bezogen auf einkondensierte Diphenoleinheiten, Bisphenol-A-Reste.

Die Polyestercarbonate II sind Polykondensate auf Basis von Diphenolen (s. oben), aromatischen Dicarbonsäuren, Kohlensäurederivaten und gegebenenfalls Verzweigungsmitteln. Nach einer bevorzugten Ausführungsform enthalten die Polyestercarbonate II mindestens 70, vorzugsweise mindestens 90, insbesondere 100, Mol-%, bezogen auf einkondensierte Dicarbonsäureeinheiten, Iso- und/oder Terephthalsäurereste. Neben Iso- bzw. Terephthalsäureresten können die bevorzugten Polyestercarbonate II bis zu 30, vorzugsweise bis zu 10, Mol-% einkondensierte Reste anderer aromatischer Dicarbonsäuren mit 8 bis 18 C-Atomen enthalten, wie z. B. Reste der

o-Phthalsäure,
5-tert.-Butylisophthalsäure,
Monochlorterephthalsäure,
2,5-Dichlorterephthalsäure,
Diphenylether-4,4'-dicarbonsäure,
1,2-Diphenoxyethan-4,4'-dicarbonsäure,
Diphenylmethan-4,4'-dicarbonsäure,
Diphenyl-4,4'-dicarbonsäure,
Naphthalin-1,4-dicarbonsäure,
Naphthalin-1,8-dicarbonsäure oder
deren Mischungen.

Der Anteil der Terephthalsäurereste an den Iso- und Terephthalsäureresten der Polyestercarbonate II beträgt 0 bis 100, vorzugsweise 2 bis 15, 30 bis 70 und 80 bis 97 und insbesondere 5 bis 10, 40 bis 60 und 85 bis 94 %.

Die Polycarbonate I bzw. Polyestercarbonate II der erfindungsgemäßen Mischungen enthalten 0,5 bis 20, vorzugsweise 1,0 bis 15, insbesondere 2 bis 10, Mol-% der Endgruppen I, bezogen auf die Summe der in den Polycarbonaten I und in den Polyestercarbonaten II einkondensierten Diphenolreste.

Bevorzugt werden Mischungen von Polycarbonat I und Polyestercarbonat II, in denen der gewichtsmäßig überwiegende Partner Endgruppen der Formel I enthält. Besonders bevorzugt werden jedoch Mischungen, in denen sowohl das Polycarbonat I als auch das Polyestercarbonat II Endgruppen der Formel I enthalten.

Bevorzugte Endgruppen I sind solche, in denen mindestens 80 %, insbesondere 100 % des Substituenten R in p-Position stehen.

Erfindungsgemäß bevorzugte Endgruppen der Formel I sind beispielsweise

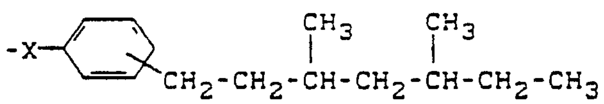 und

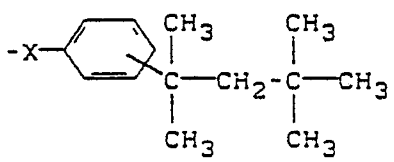

Die Polycarbonate I und die Polyestercarbonate II besitzen in der Regel relative Viskositäten von 1,15 bis 2,0, vorzugsweise von 1,2 bis 1,5 (gemessen in 0,5 gew.-%iger Lösung in Dichlormethan bei 25 °C).

Polycarbonat I und Polyestercarbonat II mit Endgruppen I sind bekannt (DE-A-2 842 005, 3 007 934). Sie können nach verschiedenen bekannten Verfahren hergestellt werden, z. B. durch Schmelzumesterung, nach dem sogenannten Pyridin-Verfahren in homogener Lösung und nach dem Zweiphasengrenzflächenverfahren.

Die Polyestercarbonate II können die Carbonat- bzw. Estergruppen blockartig oder statistisch verteilt enthalten, je nach Herstellungsverfahren.

Das Mischen der Komponenten I und II kann beispielsweise über die Schmelze der Komponenten erfolgen. Man wird dabei Bedingungen vermeiden, die eine Umesterung der Komponenten I und II zu einem Polyestercarbonat begünstigen, d. h. man wird beispielsweise bei einer Extrusion möglichst niedrige Temperaturen und möglichst kurze Verweilzeiten wählen. Die Abwesenheit von Umesterungskatalysatoren ist bevorzugt. Sind Umesterungskatalysatoren anwesend (z. B. in Produkten, die durch Schmelzumesterung hergestellt worden sind), wird man diese vernünftigerweise desaktivieren. Eine Umesterung kann dann weitgehend vermieden werden. Unter günstigen Bedingungen findet Umesterung zu nicht mehr als 50, vorzugsweise nicht mehr als 30, insbesondere nicht mehr als 10 Gew.-% statt ; mit anderen Worten : Es liegen mindestens 50, vorzugsweise mindestens 70, insbesondere mindestens 90 Gew.-% unverändertes Ausgangsmaterial vor.

Von Polyestercarbonaten gleicher Bruttozusammensetzung lassen sich die erfindungsgemäßen Mischungen durch Differentialthermoanalyse unterschieden.

Die erfindungsgemäßen Mischung können mit Füll- und Verstärkungsstoffen, wie z. B. Mineralien, Ruß, Glasfasern, C-Fasern, Metallfasern, mit Farbstoffen, Pigmenten, Thermo-, Oxydations- und UV-Stabilisatoren, Weichmachern, Gleitmitteln, Entformungshilfsmitteln, flammfest machenden Zusätzen, wie z. B. halogenierten organischen Verbindungen, Metalloxiden, Metallsalzen und weiteren Zusatzstoffen, versetzt werden.

Die erfindungsgemäßen Mischungen können z. B. für die Herstellung von Linsen, Lampenreflektoren, Autoscheinwerferreflektoren, Leuchtenabdeckungen, Lampensockel, Lampengehäuse, Hochspannungsschalter, Steckerleisten, Zählergehäuse und Mikrowellengeschirr verwendet werden.

## Beispiele

Verwendete Polycarbonate und Polyestercarbonate :

1. Bisphenol-A-Polycarbonat mit 3,3 Mol-% Isooctylphenyl-Endgruppen ; $\eta_{rel}$ = 1,283 (PC-J)
2. Bisphenol-A-Polycarbonat mit 3,3 Mol-% Phenyl-Endgruppen ; $\eta_{rel}$ = 1,280 (PC-P)
3. Polyestercarbonat aus Bisphenol A, gleichen Teilen Iso- und Terephthalsäuredichlorid, Phosgen mit 3,7 Mol-% Isooctylphenyl-Endgruppen, 74 Mol-% Ester- und 26 Mol-% Carbonatgruppen (bezogen auf die Summe von Ester- und Carbonatgruppen) ; $\eta_{rel}$ = 1,288 (PEC-J 80)
4. Polyestercarbonat wie 3), jedoch 3,7 Mol-% Phenyl-Endgruppen ; $\eta_{rel}$ = 1,289 (PEC-P 80).

Die Komponenten 1 und 3 einerseits und 2 und 4 andererseits wurden über einen Doppelwellenextruder im Gewichtsverhältnis 20 : 80 und 50 : 50 verschmolzen. Die resultierenden Mischungen hatten demnach folgende Bruttozusammensetzungen :

a) 64 Gew.-% Estergruppen (M-PEC-J 64 ; $\eta_{rel}$ = 1,278)
b) 40 Gew.-% Estergruppen (M-PEC-J 40 ; $\eta_{rel}$ = 1,275)
c) 64 Gew.-% Estergruppen (M-PEC-P 64 ; $\eta_{rel}$ = 1,277)
d) 40 Gew.-% Estergruppen (M-PEC-P 40 ; $\eta_{rel}$ = 1,278).

Aus den Mischungen a) bis d) wurden bei 330 °C Normkleinstäbe gespritzt, die an Luft bei 25 °C gelagert wurden. Von jeder Mischung wurden 20 Normkleinstäbe gelagert und nach bestimmten Zeiten, wie aus der Tabelle hevorgeht, auf Spannungsrisse hin untersucht. Es zeigte sich, daß die erfindungsgemäßen Polyestercarbonatmischungen die höchste Spannungsrißbeständigkeit aufwiesen.

| Lagerungszeit an Luft 25° C [Tage] | Anzahl Prüfkörper mit Spannungsrissen (Kantenrisse) aus jeweils 20 Prüfkörpern | | | |
|---|---|---|---|---|
| | a) M-PEC-I 64 | c) M-PEC-P 64 (Vergleich | b) M-PEC-I 40 | d) M-PEC-P 40 (Vergleich) |
| 1 | 0 | 3 | 0 | 4 |
| 7 | 1 | 8 | 2 | 7 |
| 28 | 5 | 16 | 4 | 15 |

**Patentansprüche**

1. Mischungen aus
I. aromatischem Polycarbonat und
II. aromatischem Polyestercarbonat, wobei
a) die Mischung
5 bis 70 Gew.-% I und
95 bis 30 Gew.-% II enthält,
wobei sich die Prozentangaben zu I und II auf die Summe I + II beziehen,
b) der Estergruppengehalt des Polyestercarbonats II 60 bis 95 Mol-%, bezogen auf die Summe von Ester- und Carbonatgruppen in II, beträgt und
c) wenigstens eine der Komponenten I und II 0,5-20 Mol%, bezogen auf die Summe der in I und II einkondensierten Diphenolreste, Endgruppen der Formel

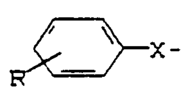

(I)

enthält, worin
—X— für —O— oder —CO— steht und
R einen verzweigten Alkylrest mit 8 bis 9 C-Atomen darstellt mit der Maßgabe, daß im Alkylrest R der Anteil von Methyl-Wasserstoffatomen, bezogen auf sämtliche Wasserstoffatome des Alkylrestes, 47 bis 89 % beträgt und daß R in o- und/oder in p-Position steht.

2. Mischungen nach Anspruch 1, dadurch gekennzeichnet, daß sie
10 bis 65 Gew.-% I und
90 bis 35 Gew.-% II enthalten.

3. Mischungen nach Anspruch 1, dadurch gekennzeichnet, daß sie
15 bis 60 Gew.-% I und
85 bis 40 Gew.-% II enthalten.

4. Mischungen nach Ansprüchen 1-3, dadurch gekennzeichnet, daß der Estergruppengehalt des Polyestercarbonats II 60 bis 85 Mol-% beträgt.

5. Mischungen nach Ansprüchen 1-3, dadurch gekennzeichnet, daß der Estergruppengehalt des Polyestercarbonats II 70 bis 80 Mol-% beträgt.

6. Mischungen nach Ansprüchen 1-5, dadurch gekennzeichnet, daß die Komponenten I und II mindestens 70 Mol-% Bisphenol-A-reste, bezogen auf einkondensierte Diphenolreste, enthalten.

7. Mischungen nach Ansprüchen 1-6, dadurch gekennzeichnet, daß mindestens eine der Komponenten I und II 100 Mol-% Bisphenol-A-reste, bezogen auf einkondensierte Diphenolreste, enthält.

8. Mischungen nach Ansprüchen 1-7, dadurch gekennzeichnet, daß die Endgruppen der Formel I aus der Gruppe bestehend aus

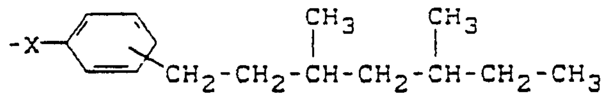

und

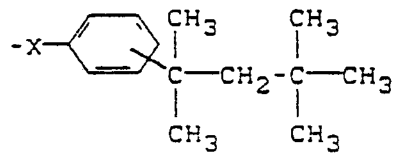

ausgewählt sind.

9. Verwendung der Mischungen nach Ansprüchen 1-8 zur Herstellung von Formkörpern, Folien, Fasern, Filamenten und Beschichtungen.

## Claims

1. Mixtures of

I. aromatic polycarbonate and

II. aromatic polyester carbonate,

a) the mixture containing

5 to 70 % by weight I and

95 to 30 % by weight II,

the percentages of I and II being based on sum of I + II,

b) the ester group content of polyestercarbonate II comprising from 60 to 95 % mol-%, based on the sum of the ester and carbonate groups in II, and

c) at least one of components I and II containing from 0.5 to 20 mol-%, based on the sum of the diphenol residues incorporated by condensation in I and II, of terminal groups corresponding to the formula

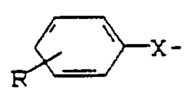

(I)

in which

—X— represents —O— or —CO— and

R is a branched $C_8$-$C_9$ alkyl radical, with proviso that the proportion of methyl hydrogen atoms in the alkyl radical R, based on all the hydrogen atoms of the alkyl radical, comprises from 47 to 89 % and that R is in the o- and/or p-position.

2. Mixtures as claimed in claim 1, characterized in that they contain

10 to 65 % by weight I and

90 to 35 % by weight II.

3. Mixtures as claimed in claim 1, characterized in that they contain

15 to 60 % by weight I and

85 to 40 % by weight II.

4. Mixtures as claimed in claims 1 to 3, characterized in that the ester group content of the polyester carbonate II comprises from 60 to 85 mol-%.

5. Mixtures as claimed in claims 1 to 3, characterized in that the ester group content of the polyester carbonate II comprises from 70 to 80 mol-%.

6. Mixtures as claimed in claims 1 to 5, characterized in that components I and II contain at least 70 mol-% bisphenol A residues, based on co-condensed diphenol residues.

7. Mixtures as claimed in claims 1 to 6, characterized in that at least one of components I and II contains 100 mol-% bisphenol A residues, based on co-condensed diphenol residues.

8. Mixtures as claimed in claims 1 to 7, characterized in that the terminal groups of formula I are selected from the group consisting of

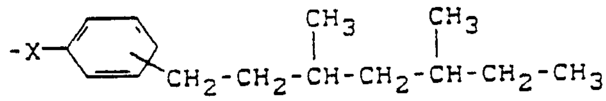

and

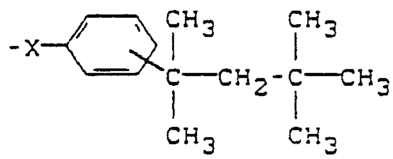

9. The use of the mixtures claimed in claims 1 to 8 for the production of mouldings, films, fibres, filaments and coatings.

**Revendications**

1. Mélanges constitués

I. d'un polycarbonate aromatique et

II. d'un polyester-carbonate aromatique,

a) le mélange contenant

5 à 70 % en poids de composant I et

95 à 30 % en poids de composant II,

les indications de pourcentages relatifs aux composants I et II se rapportant à la somme I + II,

b) la teneur en groupes ester du polyestercarbonate II s'élevant à 60-96 moles % par rapport à la somme des groupes ester et carbonate dans le composant II et

c) au moins l'un des composants I et II contenant 0,5 à 20 moles %, par rapport à la somme des restes diphénol incorporés par condensation dans I et II, de groupes terminaux de formule

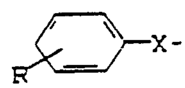

(I)

dans laquelle,

—X— représente —O— ou —CO— et

R est un reste alkyle ramifié ayant 8 à 9 atomes de carbone, sous réserve que, dans le reste alkyle, la proportion d'atomes d'hydrogène de méthyle, par rapport à tous les atomes d'hydrogène du reste alkyle, s'élève à 47-89 % et que R soit en position ortho et/ou en position para.

2. Mélanges suivant la revendication 1, caractérisés en ce qu'ils contiennent

10 à 65 % en poids de composant I et

90 à 35 % en poids de composant II.

3. Mélanges suivant la revendication 1, caractérisés en ce qu'ils contiennent

15 à 60 % en poids de composant I et

85 à 40 % en poids de composant II.

4. Mélanges suivant les revendications 1 à 3, caractérisés en ce que la teneur en groupes ester du polyester-carbonate II s'élève à une valeur de 60 à 85 moles %.

5. Mélanges suivant les revendications 1 à 3, caractérisés en ce que la teneur en groupes ester du polyester-carbonate II s'élève à une valeur de 70 à 80 moles %.

6. Mélanges suivant les revendications 1 à 5, caractérisés en ce que les composants I et II contiennent au moins 70 moles % de restes bisphénol-A par rapport aux restes diphénol incorporés par condensation.

7. Mélanges suivant les revendications 1 à 6, caractérisés en ce qu'au moins l'un des composants I et II contient 100 moles % de restes bisphénol-A, par rapport aux restes diphénol incorporés par condensation.

8. Mélanges suivant les revendications 1 à 7, caractérisés en ce que les groupes terminaux de formule I sont choisis entre les groupes

(Voir formule p. 8)

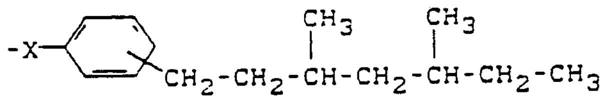

et

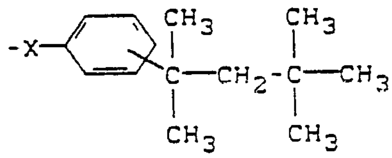

9. Utilisation des mélanges suivant les revendications 1 à 8 pour la fabrication de pièces moulées, de feuilles, de fibres, de filaments et de revêtements.